# FASCICULE DE BREVET EUROPEEN

(11) **EP 1 006 681 B1**
(45) Date de publication et mention de la délivrance du brevet: **08.12.2004**
(21) Numéro de dépôt: 99203908.1
(22) Date de dépôt: 22.11.1999
(51) Int. Cl.: H04B 7/212, H04L 12/56

(54) **Mécanisme de requête pour système de communication entre terminaux interactifs et station de tête, terminal et procédé associés**
Anforderungsmechanismus für Kommunikationssystem zwischen interaktive Terminals und Hauptstation, Terminal und Verfahren dafür
Request mechanism for communication system between interactive terminals and head station, terminal and method therefore

(30) Priorité: 01.12.1998 FR 9815141
(43) Date de publication de la demande: 07.06.2000
(73) Titulaire: Koninklijke Philips Electronics N.V., 5621 BA Eindhoven (NL)
(72) Inventeur: Berrada, Marouane, 75008 Paris (FR)
(74) Mandataire: Chaffraix, Jean

(56) Documents cités:
- WO-A-97/06622
- US-A- 5 619 492
- US-A- 5 724 659
- LE-NGOC T ET AL: "Combined free/demand assignment multiple access (CFDAMA) protocols for packet satellite communications" 2ND INTERNATIONAL CONFERENCE ON UNIVERSAL PERSONAL COMMUNICATIONS. PERSONAL COMMUNICATIONS: GATEWAY TO THE 21ST CENTURY. CONFERENCE RECORD (CAT. NO.93TH0573-6), PROCEEDINGS OF 2ND IEEE INTERNATIONAL CONFERENCE ON UNIVERSAL PERSONAL COMMUNICATIONS, OT, pages 824-828 vol. 2, XP002100325 ISBN 0-7803-1396-8, 1993, New York, NY, USA, IEEE, USA
- CELANDRONI N ET AL: "THE FODA-TDMA SATELLITE ACCESS SCHEME: PRESENTATION, STUDY OF THE SYSTEM, AND RESULTS" IEEE TRANSACTIONS ON COMMUNICATIONS, vol. 39, no. 12, 1 décembre 1991 (1991-12-01), pages 1823-1831, XP000268150

## Description

L'invention concerne un système de communication comportant au moins une station de tête et une pluralité de terminaux destinés à communiquer avec la station de tête par l'intermédiaire d'un média de transmission, lesdits terminaux comportant des moyens pour requérir l'allocation d'un certain nombre de réservations sur le média de transmission. L'invention concerne également un terminal destiné à être utilisé dans un tel système, et un procédé de requête permettant à un tel terminal de se faire allouer un certain nombre de réservations sur un média de transmission.

L'invention s'applique notamment aux systèmes interactifs de diffusion par satellite.

L'article de Nedo Celandroni et Erina Ferro, intitulé "The FODA-TDMA Satellite Access Scheme: Presentation, Study of the system, and Results", et publié dans la revue IEEE transactions on communications, vol.39, n°12, en décembre 1991, décrit un système de communication dans lequel une pluralité de terminaux peuvent accéder à un média de transmission par un mécanisme d'accès multiple à répartition dans le temps pour communiquer avec une station de tête. Ce mécanisme consiste à diviser le temps en intervalles de temps qui sont alloués dynamiquement aux terminaux sur requête desdits terminaux. Les terminaux émettent donc des requêtes qui indiquent le nombre R d'intervalles de temps dont ils ont besoin à un instant donné. Chaque terminal calcule ce nombre R à partir du nombre de paquets présents dans sa file d'attente de transmission au moment où il élabore sa requête.

L'invention a pour but de proposer une méthode pour optimiser le mécanisme de requête des terminaux, afin de limiter le nombre de réservations requises inutilement par les terminaux. L'invention permet donc d'obtenir une plus grande efficacité dans le partage des ressources, ce qui est particulièrement important dans le cas où le média de transmission est un canal satellite, parce que ce type de média est particulièrement onéreux.

Ce but est atteint avec un système de communication tel que décrit dans le paragraphe introductif et caractérisé en ce que qu'au moins un terminal comporte:
- un compteur indicatif du nombre de réservations qui lui ont déjà été allouées et qu'il n'a pas encore utilisées,
- et des moyens pour élaborer le nombre de réservations à requérir en tenant compte de la valeur dudit compteur.
L'invention tient compte de l'existence d'un délai de transmission inhérent à tout système de communication (et particulièrement important dans le cas des transmissions par satellite). Ce délai est soumis à une gigue. La station de tête doit donc tenir compte de la valeur maximum du délai de transmission lorsqu'elle émet des allocations de réservations à destination des terminaux: ces allocations doivent être envoyées suffisamment tôt pour arriver avant leur expiration (c'est-à-dire avant le début de l'intervalle de temps correspondant). Les allocations qui arrivent plus tôt sont stockées dans une mémoire d'allocations du terminal jusqu'à leur date d'expiration. L'invention consiste à tenir compte des allocations stockées dans la mémoire d'allocations du terminal pour calculer le nombre de réservations à requérir à un instant donné. Cette stratégie permet d'éviter de requérir à nouveau des réservations qui ont déjà été allouées par la station de tête. Elle réduit donc de façon significative le nombre de réservations allouées qui ne sont finalement pas utilisées par les terminaux.

L'invention sera mieux comprise et d'autres détails apparaîtront dans la description qui va suivre en référence aux dessins annexés qui sont donnés à titre d'exemples non limitatifs et dans lesquels:
- la figure 1 représente un système de communication selon l'invention,
- la figure 2 représente un système de communication par satellite selon l'invention,
- la figure 3 représente un procédé de requête selon l'invention,
- les figures 4 et 5 indiquent les résultats obtenus avec l'invention.

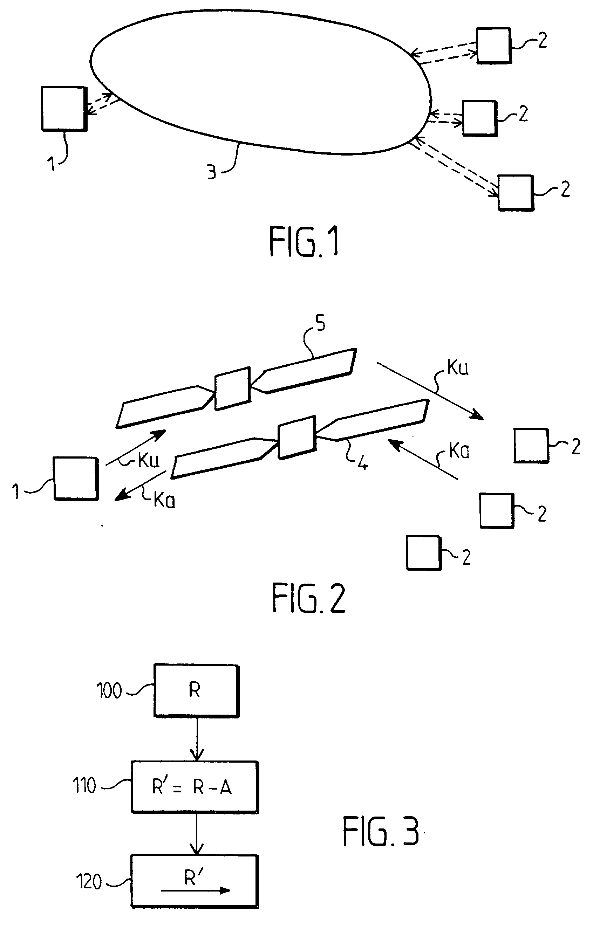

Sur la figure 1 on a représenté à titre d'exemple un système de communication qui comporte une station de tête 1 et une pluralité de terminaux interactifs 2 communiquant par l'intermédiaire d'un média de transmission 3. Ce média de transmission peut être de différentes natures. Par exemple, il peut s'agir un réseau câblé, d'une transmission par voie hertzienne, ou par voie satellite.

Sur la figure 2 on a choisi de représenter à titre d'exemple un système de communication par satellite parce que c'est le cas qui pose le plus de problèmes en termes de délais de transmission. L'invention est toutefois applicable à d'autres média de transmission. Les terminaux 2 transmettent des données et des requêtes à la station de tête 1 par l'intermédiaire d'un premier satellite 4 en utilisant une première bande de fréquences Ka, et la station de tête 1 diffuse des données et informations de contrôle aux terminaux 2 par l'intermédiaire d'un second satellite 5 en utilisant une seconde bande de fréquences Ku.

Dans l'exemple qui va être décrit, les terminaux interactifs 1 accèdent au média de transmission 3 par un mécanisme d'accès multiple à répartition dans le temps (TDMA de l'anglais Time Division Multiple Access) pour communiquer avec la station de tête. Pour cela, le temps est découpé en intervalles de temps, et des intervalles de temps sont alloués dynamiquement aux terminaux, par la station de tête, sur requête desdits terminaux. Cela signifie que les réservations sur le média de transmission, qui sont requises par les terminaux et allouées par la station de tête, sont constituées par des intervalles de temps. Lorsqu'il reste des intervalles de temps disponibles, la station de tête peut les allouer, en allocation libre, à des terminaux qui ne les ont pas demandés. Les terminaux émettent par exemple leur requêtes dans les intervalles de temps qui leurs sont alloués, à la suite des données utiles. Dans ce cas, lorsqu'ils commencent à communiquer, les terminaux doivent attendre que la station de tête leur ait alloué un intervalle de temps disponible, en allocation libre, pour pouvoir émettre une requête.

A partir des requêtes reçues, la station de tête alloue aux terminaux un certain nombre d'intervalles de temps. Ces allocations sont diffusées aux terminaux et doivent être reçues avant leur expiration pour être utilisées.

Chaque terminal 2 contient une mémoire 10 qui est une file d'attente de transmission et dans laquelle il stocke par paquets les données qu'il a à transmettre. Lorsqu'un terminal formule une requête en vue de se faire attribuer un certain nombre d'intervalles de temps, il tient compte du nombre B de paquets stockés dans cette mémoire de transmission.

Différents mécanismes de requêtes ont été proposés. Par exemple, dans l'article cité en introduction, les auteurs proposent un premier mécanisme X1 qui consiste à émettre des requêtes qui indiquent à un instant donné le contenu de la mémoire de transmission du terminal. Au niveau de la tête de réseau, chaque nouvelle requête remplace la précédente. Un second mécanisme X2 est proposé dans l'article "Combined Free/Demand Assignment Multiple Access (CFDAMA) Protocols for Packet Satellite Communications" de Tho Le-Ngoc and Jahangir I Mohammed, publié dans la revue Proceedings of 2^{nd} IEEE International Conference on Universal Personnal Communications, Ottawa, Canada, 12-15 Oct 1993, vol.2, pp 824-828. Ce second mécanisme X2 consiste à comptabiliser le nombre de réservations déjà requises et qui doivent encore être honorées pour le terminal: un compteur est incrémenté d'une unité à chaque fois qu'une réservation est requise, et décrémenté d'une unité à chaque fois qu'une allocation est reçue. Chaque requête émise par le terminal indique la différence entre le contenu de la mémoire de transmission et la valeur de ce compteur. Au niveau de la station de tête, chaque nouvelle requête s'ajoute à la précédente.

L'invention est indépendante du mécanisme de requête utilisé. Comme cela va être expliqué maintenant, elle consiste à améliorer les performances du mécanisme de requête utilisé en tenant compte, pour formuler la requête, des allocations stockées dans la mémoire d'allocations du terminal.

Tout média de transmission introduit un délai de transmission soumis à une gigue plus ou moins importante et variable selon la nature du média. Ce délai de transmission est en général inférieur à une valeur maximum. Il est donc nécessaire que le délai séparant l'envoi d'une allocation par la station de tête et l'expiration de cette allocation, soit supérieur ou égal à cette valeur maximum. Les allocations qui sont reçues avant leur expiration sont stockées dans une mémoire d'allocations avant d'être utilisées. Les allocations stockées dans la mémoire d'allocations du terminal correspondent à des requêtes qui ont déjà été honorées par la station de tête. Mais ces allocations n'ont pas encore été utilisées par le terminal. Les données pour lesquelles elles ont été formées sont donc toujours en attente dans la mémoire de transmission. L'invention a pour but d'éviter que de nouvelles requêtes ne soient formées pour ces données. Pour cela, l'invention consiste à tenir compte du nombre d'allocations stockées dans la mémoire d'allocations pour émettre une requête. De façon avantageuse le nombre R de réservations, calculé selon un mécanisme classique quelconque de requête, est remplacé par la valeur R' suivante: R'=R - A où A indique le nombre d'allocations stockées dans la mémoire d'allocations.

Sur la figure 3 on a représenté un procédé de requête selon l'invention: à la case 100 le terminal calcule la valeur R en utilisant un procédé classique de calcul de requête. A la case 110, il calcule la valeur R'=R-A. A la case 120, il émet la requête R'.

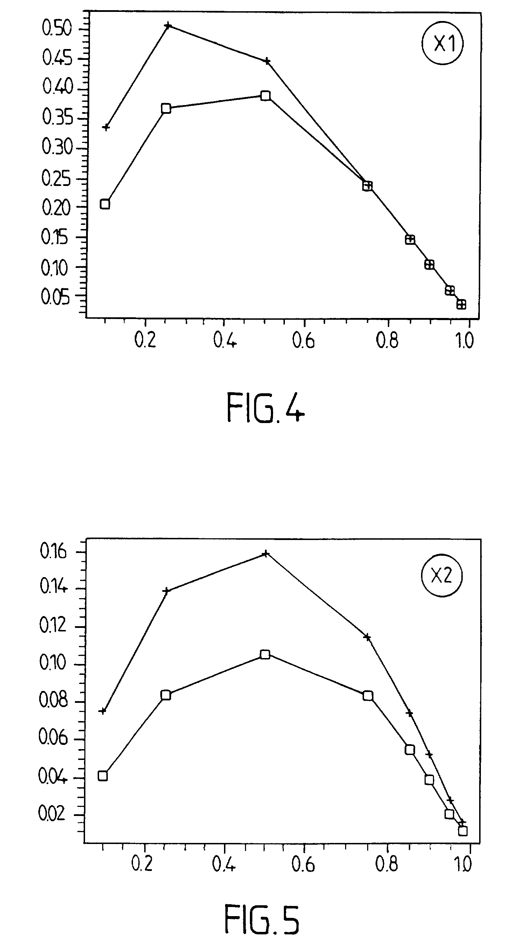

Sur les figures 4 et 5, on a représenté des courbes significatives des améliorations apportées par l'invention dans le cas d'un système de communication par satellite. Sur la figure 4 on a représenté le taux d'allocations non utilisées en fonction du taux de charge du réseau de transmission, avec le premier mécanisme de requête X1. Les carrés indiquent les résultats obtenus avec l'invention, et les croix indiquent les résultats obtenus sans l'invention. La figure 5 représente les résultats obtenus lorsqu'on utilise le second mécanisme de requête X2. Ces deux courbes montrent que l'invention permet de réduire de façon significative le taux d'allocations inutilisées, surtout pour des charges faibles et moyennes. Le nombre de réservations qui restent disponibles lorsque la station de tête a honoré toutes les requêtes des terminaux est donc plus important. La station de tête peut les allouer à des terminaux qui ne les ont pas requis. Cela améliore les performances du système, en particulier cela permet de réduire le délai moyen d'attente dans la mémoire de transmission, pour un terminal qui commence à communiquer après une période d'inactivité.

Dans l'exemple de réalisation qui vient d'être décrit, les terminaux accèdent au média de transmission par un mécanisme d'accès multiple à répartition dans le temps. Ceci n'est pas limitatif. L'invention est applicable lorsqu'on utilise d'autres mécanismes d'accès au média de transmission, par exemple un mécanisme d'accès multiple à répartition dans le temps combiné avec une répartition fréquentielle (FDMA de l'anglais Frequency Division Multiple Access), ou à un mécanisme d'accès multiple à répartition de codes de type CDMA (de l'anglais Code Division Multiple Access). Selon le cas considéré les réservations allouées par la station de tête sont constituées par des intervalles de temps, des combinaisons intervalle de temps / porteuse, des combinaisons intervalle de temps / porteuse / code.

## Revendications

1. Système de communication comportant au moins une station de tête (1) et une pluralité de terminaux (2) destinés à communiquer avec la station de tête par l'intermédiaire d'un média de transmission (3), lesdits terminaux comportant des moyens pour requérir l'allocation d'un certain nombre de réservations sur le média de transmission, **caractérisé en ce qu'**au moins un terminal (2) comporte:
- un compteur indicatif du nombre de réservations qui lui ont déjà été allouées et qu'il n'a pas encore utilisées,
- et des moyens pour élaborer le nombre de réservations à requérir en tenant compte de la valeur dudit compteur.

2. Terminal (2) destiné à communiquer avec une station de tête (1) d'un système communication par l'intermédiaire d'un média de transmission (3), et comportant des moyens pour requérir l'allocation d'un certain nombre de réservations sur le média de transmission, **caractérisé en ce qu'**il comporte:
- un compteur indicatif du nombre de réservations qui lui ont déjà été allouées et qu'il n'a pas encore utilisées,
- et des moyens pour élaborer le nombre de réservations à requérir en tenant compte de la valeur dudit compteur.

3. Procédé de requête permettant à un terminal (2), destiné à communiquer avec une station de tête (1) d'un système de communication par l'intermédiaire d'un média de transmission (3), de se faire allouer un certain nombre de réservations sur le média de transmission, **caractérisé en ce qu'**il consiste:
- à stocker un compteur indicatif du nombre de réservations qui ont déjà été allouées audit terminal et qu'il n'a pas encore utilisées,
- à élaborer le nombre de réservations à requérir pour ledit terminal en tenant compte de la valeur dudit compteur.

## Claims

1. A communication system comprising at least a master station (1) and a plurality of terminals (2) intended to communicate with the master station via a transmission medium (3), said terminals comprising means for requesting the assignment of a certain number of reservations on the transmission medium, **characterized in that** at least one terminal (2) comprises:
- a counter which indicates the number of reservations that have already been assigned to the terminal and which the terminal has not yet used,
- and means for producing the number of reservations to be requested while the value of said counter is taken into account.

2. A terminal (2) intended to communicate with a master station (1) of a communication system via a transmission medium (3) and comprising means for requesting the assignment of a certain number of reservations on the transmission medium, **characterized in that** it comprises:
- a counter which indicates the number of reservations that have already been assigned to the terminal and which the terminal has not yet used,
- and means for producing the number of reservations to be requested while the value of said counter is taken into account.

3. A request method enabling a terminal (2) intended for communication with a master station (1) of a communication system via a transmission medium (3) to have a certain number of reservations assigned to it on the transmission medium, **characterized in that** the method comprises:
- storing a counter that indicates the number of reservations that have already been assigned to said terminal and which the terminal has not yet used,
- producing the number of reservations to be requested for said terminal while the value of said counter is taken into account.

## Patentansprüche

1. Kommunikationssystem mit mindestens einer Hauptstation (1) und einer Vielzahl von Terminals (2) für die Kommunikation mit der Hauptstation über ein Übertragungsmedium (3); wobei die besagten Terminals Mittel enthalten, um die Zuteilung einer bestimmten Anzahl an Reservierungen in dem Übertragungsmedium anzufordern, **dadurch gekennzeichnet, dass** mindestens ein Terminal (2) enthält:
- Einen Zähler zur Anzeige der Anzahl Reservierungen, die ihm bereits zugeteilt wurden und die er noch nicht verwendet hat,
- und Mittel zur Erhebung der Anzahl anzufordernder Reservierungen unter Berücksichtigung des Wertes des besagten Zählers.

2. Terminal (2) für die Kommunikation mit einer Hauptstation eines Kommunikationssystems über ein Übertragungsmedium (3) mit Mitteln, um die Zuteilung einer gewissen Anzahl an Reservierungen im Übertragungsmedium anzufordern, **dadurch gekennzeichnet, dass** es enthält:
- Einen Zähler zur Anzeige der Anzahl Reservierungen, die ihm bereits zugeteilt wurden und die er noch nicht verwendet hat,
- und Mittel zur Erhebung der Anzahl anzufordernder Reservierungen unter Berücksichtigung des Wertes des besagten Zählers.

3. Anforderungsverfahren, um es einem für die Kommunikation mit einer Hauptstation (1) eines Kommunikationssystems über ein Übertragungsmedium (3) bestimmten Terminal (2) zu ermöglichen, sich eine gewisse Anzahl an Reservierungen in dem Übertragungsmedium zuteilen zu lassen, **dadurch gekennzeichnet, dass** es besteht aus:
- Der Speicherung eines Zählers für die Anzeige der Anzahl an Reservierungen, die dem besagten Terminal bereits zugeteilt wurden und die er noch nicht verwendet hat,
- der Erhebung der Anzahl der für das besagte Terminal anzufordernder Reservierungen unter Berücksichtigung des Werts des besagten Zählers.
